# FASCICULE DE BREVET EUROPEEN

(11) **EP 3 579 130 B1**
(45) Date de publication et mention de la délivrance du brevet: **04.03.2026**
(21) Numéro de dépôt: 19177815.8
(22) Date de dépôt: 03.06.2019
(51) Int. Cl.: G06F 21/36, G06Q 20/34, G07F 7/10, H04M 1/72409, G06F 21/35, G06Q 20/32, G06Q 20/40, G06Q 20/20

(54) **DISPOSITIF ET PROCEDE POUR L'IDENTIFICATION SECURISEE D'UN UTILISATEUR**
VORRICHTUNG UND VERFAHREN ZUR GESICHERTEN IDENTIFIZIERUNG EINES BENUTZERS
DEVICE AND METHOD FOR SECURE IDENTIFICATION OF A USER

(30) Priorité: 04.06.2018 BE 201805368
(43) Date de publication de la demande: 11.12.2019
(73) Titulaire: Ingenico Belgium, 1130 Bruxelles (BE)
(72) Inventeur: YOUSSEF, Mohamed Amine, 1831 Machelen (BE); CAVIGNEAUX, Chistophe, 1360 Orbais (BE); BAESENS, Pierrot, 1600 Sint-Pieters-Leeuw (BE); LESIRE, Philippe, 2550 Kontich (BE)
(74) Mandataire: LLR

(56) Documents cités:
- WO-A1-2016/014784
- US-A1- 2013 328 801
- US-A1- 2016 224 113
- US-A1- 2017 286 938
- US-B2- 7 146 577
- NA: "Payment Card Industry (PCI) Software-based PIN Entry on COTS Security Requirements", 31 January 2018 (2018-01-31), XP055627362, Retrieved from the Internet <URL:https://www.pcisecuritystandards.org/documents/SPoC_Security__Requirements_v1.0.pdf?agreement=true&time=1569851789111> [retrieved on 20190930]

## Description

### DOMAINE TECHNIQUE DE L'INVENTION

La présente invention concerne le domaine de l'authentification et/ou du contrôle de l'identité d'un utilisateur qui demande un service ou qui procède à une transaction, plus précisément l'invention concerne un dispositif et un procédé pour identifier une personne et qui convient également aux personnes malvoyantes.

### ARRIERE-PLAN TECHNOLOGIQUE DE L'INVENTION

L'objet de l'invention consiste à augmenter la sécurité lorsqu'un utilisateur entre un code d'identification tel que, par exemple, un code PIN, sur un écran tactile.

Généralement, l'écran affiche un clavier d'identification personnelle avec une valeur numérique ou autre pour chaque touche et l'utilisateur sélectionne chaque touche correspondant à chaque valeur de chaque chiffre du code PIN.

Pendant cette opération, n'importe quel tiers peut observer et mémoriser jusqu'à 12 chiffres (généralement 4 ou 6 chiffres) du code PIN, ce qui permet ensuite à un tiers frauduleux de combiner ces informations avec d'autres pour effectuer un retrait frauduleux sur le compte.

Un exemple de l'inconvénient de cette solution est représenté par le document EP 2 791 845.

Jusqu'à présent, les fabricants de terminaux équipaient la partie affichée d'une protection contre la possibilité d'observer les valeurs des touches. Cette solution n'est pas complètement efficace et présente l'inconvénient d'augmenter le volume du terminal.

Une autre tentative pour résoudre ce problème consistait, conformément au document US 8 392 846 et au document US2013/328801, à afficher un clavier d'identification personnelle virtuel à des emplacements variables sur un écran tactile afin d'empêcher la fraude ou l'interception de l'identification personnelle. Cependant, une caméra pourrait néanmoins observer chaque étape et, en revoyant les images, un tiers frauduleux pourrait accéder aux informations. La solution de la présente invention est capable de pallier cet inconvénient.

### DESCRIPTION GENERALE DE L'INVENTION

La présente invention a pour but de pallier certains inconvénients de l'art antérieur en proposant des moyens pour l'authentification ou le contrôle sécurisé de l'identité de personnes, y compris de personnes mal voyantes.

Ce but est atteint par un terminal portable de paiement ou de point de vente conforme à la revendication 1.

Selon une autre caractéristique, lors du lancement du mode d'accessibilité sur le dispositif mobile, ladite application étant téléchargée à partir d'un portail de téléchargement d'applications, le terminal comprend au moins un programme pour exécuter une authentification de ladite application de mode d'accessibilité installée au moyen de l'ensemble de clés pour l'authentification et/ou le chiffrement mémorisé dans la première mémoire.

Selon une autre caractéristique, le terminal comprend :
- une application de mode d'accessibilité mémorisée dans la première mémoire et mettant en œuvre la séquence entière du mode d'accessibilité du terminal pour permettre au titulaire de carte de valider une transaction sur l'écran du terminal ;
- un agencement d'authentification pour mettre en œuvre un processus d'authentification pour les titulaires de carte en entrant un code PIN ou une séquence de nombres et de lettres (SNL) ;
- un capteur de proximité pour détecter la présence d'un titulaire de carte ;
- un premier dispositif de détection pour détecter la présence, dans le connecteur, d'une fiche enfichée pour connecter un casque de titulaire de carte et comprenant un agencement pour produire un signal électrique pour déclencher l'exécution du mode d'accessibilité ;
- un deuxième dispositif de détection pour détecter la position du doigt sur l'écran chaque fois qu'un doigt du propriétaire du casque touche l'écran.

Selon une autre caractéristique, le module de gestion de transaction comprend un agencement pour au moins configurer ledit terminal pour exécuter, si le dispositif mobile de titulaire de carte n'est pas détecté par le dispositif de détection de moyens de communication filaire/sans fil, un mode d'accessibilité, dans lequel, au moins, le terminal :
- demande, à l'aide de moyens de notification, la connexion d'un casque dans le connecteur jack dudit terminal ;
- exécute la première application de mode d'accessibilité, après la détection, au moyen du premier dispositif de détection, d'une fiche enfichée pour connecter un casque de titulaire de carte, l'écran du terminal étant brouillé et maintenu en noir pendant la séquence entière du mode d'accessibilité ;
- configure, au moyen d'un ensemble d'agencements, l'écran pour détecter la position du doigt du titulaire de carte lorsque ledit titulaire de carte déplace son doigt sur ledit écran pour sélectionner chaque chiffre de son code PIN en déplaçant son doigt sur ledit écran ;
- envoie, par l'intermédiaire du casque, de signaux audio préenregistrés correspondant à chaque position du doigt pour aider le titulaire de carte à choisir les chiffres de son code PIN.

Selon une autre caractéristique, le terminal comprend au moins un moyen de notification qui consiste en un agencement audio pour émettre un message vocal par l'intermédiaire d'un haut-parleur, inclus dans ledit terminal, et/ou envoyer ledit message vocal au dispositif mobile de titulaire de carte.

Selon une autre caractéristique, le terminal comprend au moins un moyen de notification qui consiste en un module de messages textuels pour afficher des informations sur l'écran dudit terminal ou envoyer lesdites informations sur l'écran du dispositif mobile de titulaire de carte.

Selon une autre caractéristique, le terminal comprend à la fois un module de messages textuels et un agencement audio pour envoyer des informations au titulaire de carte par l'intermédiaire dudit terminal ou dudit dispositif mobile de titulaire de carte.

Selon une autre caractéristique, le terminal comprend un ensemble de clés mémorisé dans une sixième mémoire, incluse dans le terminal, ledit ensemble de clés ne pouvant pas être lu à partir de l'extérieur du terminal et correspondant à l'ensemble de clés mémorisé dans la première mémoire, l'ensemble de clés mémorisé dans la sixième mémoire étant poussé avec l'application instantanée sur la machine virtuelle s'exécutant sur le dispositif mobile de titulaire de carte, ledit ensemble de clés de la sixième mémoire étant utilisé pour l'échange sécurisé de données et/ou d'informations entre le terminal et le dispositif mobile de titulaire de carte et enregistré dans une mémoire du dispositif mobile de titulaire de carte où il ne peut pas être lu à partir de l'extérieur.

Selon une autre caractéristique, le terminal comprend au moins un ensemble de programmes envoyé au dispositif mobile du titulaire de carte pour supprimer la machine virtuelle et/ou l'application instantanée s'exécutant sur ladite machine virtuelle, dudit dispositif mobile après la validation de la transaction.

Selon une autre caractéristique, la machine virtuelle comprend au moins un ensemble de programmes pour simuler chaque composant du terminal de paiement et leur connexion de manière à mettre en œuvre, lors de l'exécution de l'application instantanée, un mode d'accessibilité comprenant au moins le mode d'accessibilité tel qu'exécuté par ledit terminal.

Selon une autre caractéristique, l'application instantanée comprend un ensemble de programmes pour simuler les fonctionnalités de chaque composant du terminal de paiement et sa connexion de manière à mettre en œuvre un mode d'accessibilité comprenant au moins le mode d'accessibilité tel qu'exécuté par ledit terminal.

Selon une autre caractéristique, l'application instantanée lancée par le terminal sur le dispositif mobile de titulaire de carte comprend au moins un programme dont l'exécution sur le dispositif mobile de titulaire de carte permet de répondre à la demande d'authentification et/ou de code PIN envoyée par le terminal.

Selon une autre caractéristique, l'application instantanée lancée par le terminal sur le dispositif mobile de titulaire de carte comprend au moins un programme dont l'exécution sur le dispositif mobile de titulaire de carte récupère, dans la mémoire dudit dispositif mobile de titulaire de carte, l'ensemble de clés enregistré, permettant audit dispositif mobile de répondre à la demande d'authentification et/ou de code PIN envoyée par le terminal.

Selon une autre caractéristique, le terminal comprend une mémoire dans laquelle les informations de transaction relatives au moins au montant de la transaction et/ou au marchand sont enregistrées, lesdites informations étant transmises avec la demande de code PIN au dispositif mobile de titulaire de carte.

Selon une autre caractéristique, l'application instantanée s'exécutant sur le dispositif mobile de titulaire de carte comprend au moins un ensemble de programmes pour configurer le dispositif mobile de titulaire de carte, lorsqu'au moins une demande d'entrée de code PIN a été envoyée par ledit terminal, de manière à :
- vérifier si un casque est enfiché ou non dans le connecteur jack audio dudit dispositif mobile ;
- demander, à l'aide d'un moyen de notification, la connexion d'un casque au dispositif mobile, si aucun casque n'est enfiché ;
- lancer l'exécution du mode d'accessibilité pour l'entrée du code PIN une fois qu'un casque est enfiché.

Selon une autre caractéristique, l'application instantanée s'exécutant sur le dispositif mobile de titulaire de carte comprend au moins un programme pour récupérer l'ensemble de clés dans la mémoire dudit dispositif mobile de manière à chiffrer le code PIN entré par le titulaire de carte avant son envoi au terminal pour la validation de la transaction.

Selon une autre caractéristique, l'application instantanée s'exécutant sur le dispositif mobile de titulaire de carte comprend au moins un programme pour brouiller et maintenir en noir l'écran du dispositif mobile de titulaire de carte pendant la séquence entière du mode d'accessibilité.

Selon une autre caractéristique, l'application instantanée comprend au moins un programme configurant l'écran du dispositif mobile de titulaire de carte pour détecter la position du doigt du titulaire de carte lorsque ledit titulaire de carte déplace son doigt sur ledit écran pour sélectionner chaque chiffre de son code PIN en déplaçant son doigt sur ledit écran.

Selon une autre caractéristique, l'application instantanée comprend au moins un programme configurant le dispositif mobile de titulaire de carte pour envoyer, par l'intermédiaire du casque, les signaux audios préenregistrés correspondant à chaque position du doigt pour aider le titulaire de carte à choisir les chiffres de son code PIN, lesdits signaux audios étant transmis au dispositif mobile de titulaire de carte avec les informations de transaction et le code PIN demandés par le terminal.

Selon une autre caractéristique, l'application instantanée comprend au moins un programme pour configurer le dispositif mobile de titulaire de carte de manière à permettre au titulaire de carte d'entrer son code PIN au moyen d'une application tiers autorisée.

Un autre but de la présente invention consiste à proposer un processus pour l'authentification sécurisée d'un utilisateur.

Cet but est atteint au moyen d'un procédé pour l'identification sécurisée d'un titulaire de carte avec un terminal portable de paiement ou de point de vente tel que décrit dans la présente demande et/ou un dispositif mobile de titulaire de carte, ledit procédé étant conforme à la revendication 23.

Selon une autre caractéristique, le procédé pour l'identification sécurisée comprend au moins, lors du lancement du mode d'accessibilité l'exécution d'une authentification de ladite application de mode d'accessibilité installée.

Selon une autre caractéristique, le procédé pour l'identification sécurisée comprend au moins les étapes :
- de création d'une machine virtuelle si, lors du lancement du mode d'accessibilité sur le dispositif mobile, le terminal détermine qu'aucune application de mode d'accessibilité n'est installée sur ledit dispositif mobile ;
- de transmission de ladite machine virtuelle au dispositif mobile de titulaire de carte ;
- de poussée d'une application instantanée sur ladite machine virtuelle pour exécuter le mode d'accessibilité sur le dispositif mobile (3).

Selon une autre caractéristique, le procédé pour l'identification sécurisée comprend au moins l'étape de chiffrement au moins du code PIN ou d'une partie du code PIN sur le dispositif mobile de titulaire de carte avant sa transmission au terminal pour validation.

Selon une autre caractéristique, l'application instantanée comprend au moins un programme configurant le dispositif mobile de titulaire de carte pour envoyer, par l'intermédiaire du casque, les signaux audios préenregistrés correspondant à chaque position du doigt pour aider le titulaire de carte à choisir les chiffres de son code PIN, lesdits signaux audios étant transmis au dispositif mobile de titulaire de carte avec les informations de transaction et le code PIN demandés par le terminal.

Selon une autre caractéristique, l'application instantanée comprend au moins un programme pour configurer le dispositif mobile de titulaire de carte de manière à permettre au titulaire de carte d'entrer son code PIN au moyen d'une application tiers autorisée.

Un autre but de la présente invention consiste à proposer un processus pour l'authentification sécurisée d'un utilisateur.

Cet but est atteint au moyen d'un procédé pour l'identification sécurisée d'un titulaire de carte avec un terminal portable de paiement ou de point de vente tel que décrit dans la présente demande et/ou un dispositif mobile de titulaire de carte, ledit procédé comprenant au moins l'étape :
- de détection de moyens de communication filaire/sans fil d'un dispositif mobile ;
le procédé étant caractérisé en ce que, si le dispositif mobile de titulaire de carte est détecté, il comprend au moins l'étape de configuration du terminal pour :
- lancer l'exécution d'un mode d'accessibilité sur le dispositif mobile du titulaire de carte ;
- transmettre une demande au dispositif mobile pour envoyer un code PIN au terminal ; et
- lors de la réception d'une communication du dispositif mobile comprenant des informations, déchiffrer lesdites informations pour obtenir le code PIN et valider la transaction.

Selon une autre caractéristique, le procédé pour l'identification sécurisée comprend au moins, lors du lancement du mode d'accessibilité, les étapes :
- de vérification si une application propriétaire de mode d'accessibilité est installée sur le dispositif mobile ;
- d'exécution d'une authentification de ladite application de mode d'accessibilité installée.

Selon une autre caractéristique, le procédé pour l'identification sécurisée comprend au moins les étapes :
- de création d'une machine virtuelle si, lors du lancement du mode d'accessibilité sur le dispositif mobile, le terminal détermine qu'aucune application de mode d'accessibilité n'est installée sur ledit dispositif mobile ;
- de transmission de ladite machine virtuelle au dispositif mobile de titulaire de carte ;
- de poussée d'une application instantanée sur ladite machine virtuelle pour exécuter le mode d'accessibilité sur le dispositif mobile (3).

Selon une autre caractéristique, le procédé pour l'identification sécurisée comprend au moins l'étape de chiffrement au moins du code PIN ou d'une partie du code PIN sur le dispositif mobile de titulaire de carte avant sa transmission au terminal pour validation.

Selon une autre caractéristique, si le dispositif mobile n'est pas détecté, le procédé pour l'identification sécurisée comprend au moins les étapes :
- de demande, au moyen d'une notification, sur l'écran du terminal, de la connexion d'un casque dans le connecteur de fiche dudit terminal ;
- de détection de la présence d'une fiche enfichée dans le connecteur du terminal pour la connexion d'un casque de titulaire de carte ;
- de déclenchement de l'exécution d'un premier mode d'accessibilité permettant au titulaire de carte de s'identifier ;
- de brouillage et de maintien de l'écran en noir pendant la séquence du mode d'accessibilité ;
- de configuration de l'écran pour détecter la position du doigt du titulaire de carte lorsque ledit titulaire de carte déplace son doigt sur ledit écran pour sélectionner chaque chiffre de son code PIN en déplaçant son doigt sur ledit écran ;
- d'envoi, par l'intermédiaire du casque, de signaux audio préenregistrés correspondant à chaque position du doigt pour aider le titulaire de carte à choisir les chiffres de son code PIN.

Selon une autre caractéristique, l'étape d'exécution du mode d'accessibilité sur le dispositif mobile de titulaire de carte comprend les étapes :
- de contrôle si un casque est enfiché ou non dans le connecteur jack audio dudit dispositif mobile ;
- de demande de la connexion d'un casque au dispositif mobile, si aucun casque n'est enfiché ;
- de lancement de l'exécution du mode d'accessibilité pour l'entrée du code PIN une fois qu'un casque est enfiché.

### DESCRIPTION DES FIGURES ILLUSTRATIVES

D'autres particularités et avantages de la présente invention apparaîtront plus clairement à la lecture de la description ci-après, faite en référence aux dessins annexés, dans lesquels :
- les figures 1A, 1B sont respectivement des représentations schématiques des composants du terminal portable de paiement ou de point de vente et du contrôleur, selon un mode de réalisation ;
- les figures 2A, 2B sont des représentations schématiques de l'entrée d'un code PIN sur un écran brouillé en noir, selon un mode de réalisation ;
- les figures 3A, 3B et 3C sont respectivement des représentations schématiques du processus d'authentification, de l'étape dudit processus d'authentification sur le terminal portable de paiement ou de point de vente et de l'étape dudit processus d'authentification sur le dispositif mobile de titulaire de carte (3), composant dudit processus d'authentification ;
- la figure 4 est une représentation schématique du terminal échangeant avec le dispositif mobile de titulaire de carte pendant la connexion du terminal portable de paiement ou de point de vente et du contrôleur, selon un mode de réalisation.

### DESCRIPTION DES MODES DE REALISATION PREFERES DE L'INVENTION

La présente invention concerne un terminal portable de paiement ou de point de vente (1) pour l'identification sécurisée d'un utilisateur, y compris un utilisateur malvoyant, pendant une transaction.

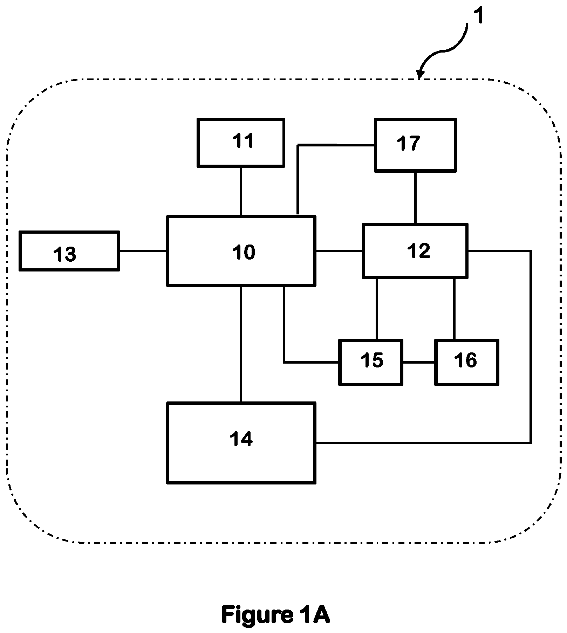

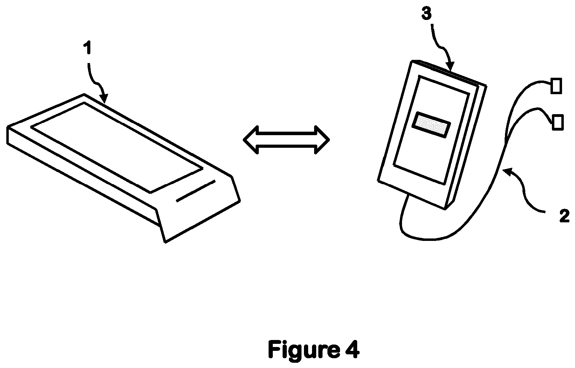

Dans certains modes de réalisation, le terminal portable de paiement ou de point de vente (1, figures 1A, 4) avec un connecteur jack pour une transaction sécurisée comprend au moins :
- une première mémoire (13) pour mémoriser un ensemble de programmes ou une séquence d'instructions à exécuter sur un processeur dudit terminal et au moins un ensemble de clés pour l'authentification et/ou le chiffrement ne pouvant pas être lu à partir de l'extérieur du terminal ;
- un dispositif de détection de moyens de communication filaire ou sans fil (USB, Wifi, Bluethooth, ...) pour détecter si un titulaire de carte utilise un dispositif mobile (3, figure 4) ;
le terminal (1) étant caractérisé en ce qu'il comprend au moins un module de gestion de transaction comprenant un agencement pour configurer le terminal de manière à :
- lancer l'exécution d'un mode d'accessibilité sur le dispositif mobile (3) du titulaire de carte ;
- transmettre une demande au dispositif mobile pour envoyer un code PIN au terminal ; et
- lors de la réception d'une communication du dispositif mobile comprenant des informations, déchiffrer lesdites informations pour obtenir le code PIN, au moyen de l'ensemble de clés pour l'authentification et/ou le chiffrement et valider la transaction.

Ainsi, le module de gestion de transaction configure ledit terminal de paiement pour lui permettre de lancer l'exécution du mode d'accessibilité, ce qui est équivalent à démarrer l'exécution du mode d'accessibilité, sur le dispositif mobile utilisateur. Lancer/démarrer l'exécution d'un programme à distance sur un autre dispositif pour lui permettre de communiquer de manière sécurisée implique une commande à distance. Dans certains modes de réalisation, le terminal de paiement comprend au moins des moyens de communication pour se connecter au dispositif mobile de l'utilisateur, un agencement matériel et logiciel pour envoyer un signal d'activation ou des instructions au dispositif mobile pour que l'exécution du mode d'accessibilité se lance ou démarre.

Dans certains modes de réalisation, lors du lancement du mode d'accessibilité sur le dispositif mobile (3), le terminal comprend au moins un programme pour vérifier si une application propriétaire de mode d'accessibilité est installée sur le dispositif mobile, ladite application étant téléchargée à partir d'un portail de téléchargement d'applications, tel que, par exemple, Google playstore ou Applestore, et exécuter une authentification de ladite application de mode d'accessibilité installée au moyen de l'ensemble de clés pour l'authentification et/ou le chiffrement mémorisé dans la première mémoire. Dans ce cas, l'application de mode d'accessibilité peut comprendre un ensemble de clés pour l'authentification et/ou le chiffrement de données, lesdites clés correspondant à l'ensemble de clés mémorisé dans la première mémoire du terminal.

Dans certains modes de réalisation, le terminal portable de paiement ou de point de vente comprend au moins un système d'exploitation (OS) pour la création d'une machine virtuelle, si, lors du lancement du mode d'accessibilité sur le dispositif mobile (3), le terminal détermine qu'aucune application de mode d'accessibilité n'est installée sur ledit dispositif mobile, ladite machine virtuelle étant transmise au dispositif mobile (3) du titulaire de carte, lorsque ledit dispositif mobile (3) est détecté au moyen du dispositif de détection de moyens de communication filaire/sans fil du terminal, de manière à être installée sur ledit dispositif mobile (3).

Dans certains modes de réalisation, le terminal portable de paiement ou de point de vente comprend au moins une application instantanée qui est poussée à partir du terminal dans la machine virtuelle s'exécutant sur le dispositif mobile (3), pour exécuter le mode d'accessibilité sur le dispositif mobile (3) du titulaire de carte.

Par « application instantanée », nous entendons une application qui peut être exécutée instantanément sur le dispositif mobile sans nécessiter une installation sur ledit dispositif mobile (3).

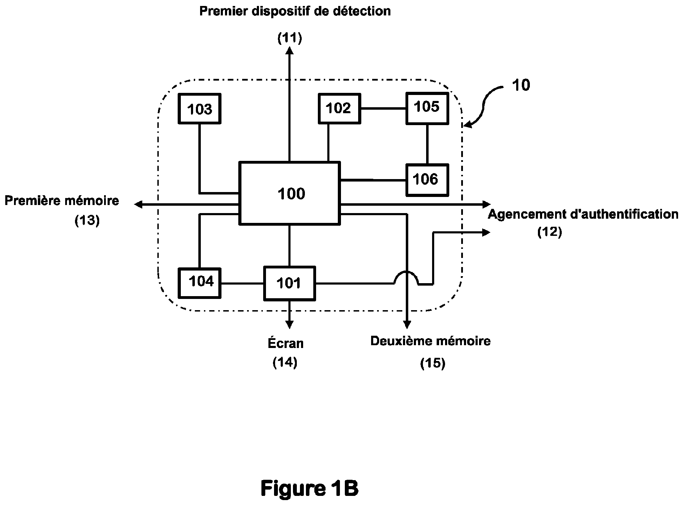

Dans certains modes de réalisation, le terminal (1) comprend :
- une application de mode d'accessibilité mémorisée dans la première mémoire et mettant en œuvre la séquence entière du mode d'accessibilité du terminal pour permettre au titulaire de carte de valider une transaction sur l'écran (14) du terminal ;
- un agencement d'authentification (12, figures 1A, 1B) pour mettre en œuvre un processus d'authentification pour les titulaires de carte en entrant un code PIN ou une séquence de nombres et de lettres (SNL) ;
- un capteur de proximité pour détecter la présence d'un titulaire de carte (non montré) ;
- un premier dispositif de détection (11) pour détecter la présence, dans le connecteur, d'une fiche enfichée pour connecter un casque de titulaire de carte (2, figure 4) et comprenant un agencement pour produire un signal électrique pour déclencher l'exécution du mode d'accessibilité ;
- un deuxième dispositif de détection (101) pour détecter la position du doigt sur l'écran (14), chaque fois qu'un doigt du propriétaire du casque (2) touche l'écran (14).

Dans certains modes de réalisation, le module de gestion de transaction comprend un agencement pour au moins configurer ledit terminal pour exécuter, si le dispositif mobile (3) du titulaire de carte n'est pas détecté par le dispositif de détection de moyens de communication filaire/sans fil, un mode d'accessibilité dans lequel, au moins, le terminal :
- demande, à l'aide de moyens de notification, la connexion d'un casque (2) dans le connecteur jack dudit terminal ;
- exécute la première application de mode d'accessibilité, après la détection, au moyen du premier dispositif de détection, d'une fiche enfichée pour connecter un casque de titulaire de carte (2), l'écran du terminal étant brouillé et maintenu en noir pendant la séquence entière du mode d'accessibilité ;
- configure, au moyen d'un ensemble d'agencements, l'écran pour détecter la position du doigt du titulaire de carte lorsque ledit titulaire de carte déplace son doigt sur ledit écran pour sélectionner chaque chiffre de son code PIN en déplaçant son doigt sur ledit écran ;
- envoie, par l'intermédiaire du casque (2), de signaux audio préenregistrés correspondant à chaque position du doigt pour aider le titulaire de carte à choisir les chiffres de son code PIN.

Le terminal (1), tel qu'illustré sur la figure 1A, comprend un agencement connecté à l'agencement d'authentification (12) pour brouiller et maintenir l'écran (14) en noir pendant la séquence entière du mode d'accessibilité.

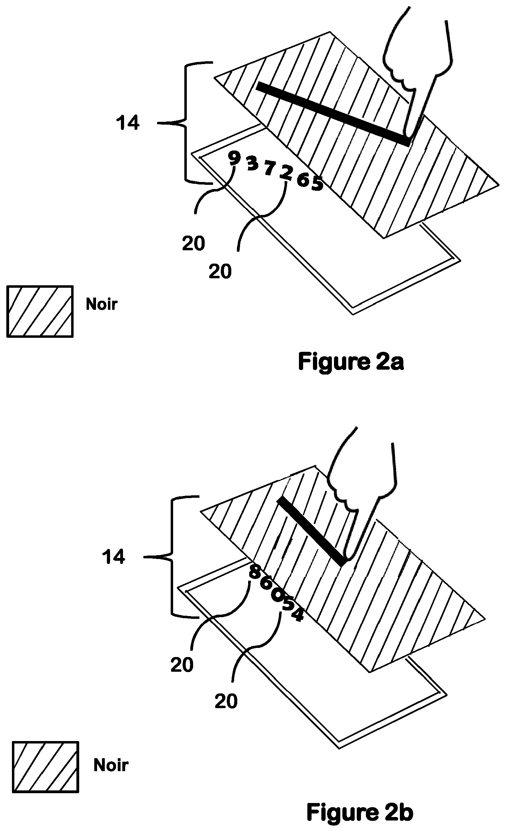

L'agencement d'authentification (12) peut comprendre un programme pour générer, à chaque fois que le mode d'accessibilité est actif, au moins un ensemble de « chaîne de touches » (figures 2A, 2B) mémorisé dans un « fichier de chaînes » du terminal (1), pour l'entrée du PIN/de la SNL, chaque « chaîne de touches » comprenant un ensemble de touches (20), lesdites touches (20) étant réparties de manière aléatoire dans ladite « chaîne de touches ».

Le deuxième dispositif de détection (101) comprend un agencement pour détecter la longueur, d, ou l'orientation du déplacement du doigt sur l'écran et est connecté à l'agencement d'authentification (12) de manière à transmettre un signal correspondant à la longueur d ou à l'angle d'orientation pour indiquer qu'un déplacement a lieu ou non en fonction de la valeur de ladite longueur d ou dudit angle d'orientation comparée à une valeur de seuil mémorisée.

L'agencement d'authentification peut également comprendre un module de tri pour récupérer, lors de la réception d'un signal indiquant un déplacement, dans le « fichier de chaînes » mémorisé, une « chaîne de touches » de manière à attribuer une valeur de touche correspondant à la longueur d ou à l'angle d'orientation du déplacement du doigt, et est connecté à un agencement audio (17) du terminal (1) où les signaux audio préenregistrés correspondant à chaque touche de la « chaîne de touches » sont mémorisés, de manière à sélectionner le son correspondant à la touche attribuée au déplacement et à l'émettre par l'intermédiaire du connecteur jack vers le casque (2) du titulaire de carte.

Le terminal peut comprendre un programme pour réitérer ces actions jusqu'à ce que l'utilisateur écoutant la valeur d'un chiffre ou d'un caractère d'un PIN/d'une SNL retire son doigt de l'écran (14), la dernière valeur, indiquée en tant que retour, est ensuite mémorisée dans la deuxième mémoire (15), incluse dans le terminal (1), en tant que chiffre du PIN/de la SNL.

L'expression « chaîne de touches » signifie ici un nombre de chiffres ou de caractères successifs donné.

La « chaîne de touches » peut comprendre au moins des touches (20) avec des valeurs de 0 à 9 ou des lettres de A à Z, ou les deux. Par exemple, et de manière non limitative, une chaîne générée peut être « 3241569807 ».

A chaque fois que l'utilisateur touche l'écran après un choix d'un chiffre de son code PIN/code, le terminal récupère une nouvelle « chaîne de touches » dans le « fichier de chaînes ».

Une fois qu'une valeur de touche (20) est choisie par l'utilisateur, un geste de double frappe du doigt permet de valider ledit choix.

Il est ainsi évident que le terminal décrit dans la présente demande fournit une manière sécurisée de valider une transaction, étant donné qu'il n'y a pas de touche ou de clavier affiché sur l'écran (14).

De plus, étant donné que l'écran est maintenu en noir et que l'utilisateur doit seulement déplacer son doigt sur l'écran pour sélectionner une touche (20) ou un chiffre, le terminal peut être utilisé à la fois pour des utilisateurs normaux et malvoyants.

Par « transaction », nous entendons le paiement d'un produit ou d'un service par exemple.

Le dispositif mobile (3) du titulaire de carte (téléphone intelligent ou tablette, par exemple) peut comprendre un ensemble de moyens de communication, tels qu'un câble USB, le Wifi, la NFC (Near Field Communication), le Bluetooth, la VLC (Visual Light Communication) ... pour se connecter au terminal.

Le terminal de paiement peut également comprendre un ensemble de moyens de communication, tels qu'un câble USB, le Wifi, la NFC (Near Field Communication), le Bluetooth, la VLC (Visual Light Communication) pour établir une communication avec le dispositif mobile (3) du titulaire de carte.

La deuxième application de mode d'accessibilité est utilisée en tant qu'application miroir du terminal. En lançant ladite application, le titulaire de carte (personne normale ou mal voyante) est maintenant capable d'entrer le code PIN sur son propre dispositif. Cette solution a pour avantage, en particulier pour une personne malvoyante, de ne pas nécessiter l'apprentissage de la manière d'utiliser un nouveau dispositif pour effectuer une transaction, étant donné que ladite personne mal voyante sait maintenant comment utiliser son propre dispositif mobile (3) (téléphone intelligent, tablette, ...).

Dans certains modes de réalisation, le terminal (1) comprend un moyen de notification qui peut être un agencement audio pour émettre un message vocal par l'intermédiaire d'un haut-parleur, inclus dans ledit terminal, et/ou envoyer ledit message vocal au dispositif mobile (3) du titulaire de carte.

Dans certains modes de réalisation, le terminal (1) comprend un moyen de notification qui peut être un module de messages textuels pour afficher des informations sur l'écran dudit terminal ou envoyer lesdites informations sur l'écran du dispositif mobile (3) du titulaire de carte.

Dans certains modes de réalisation, le terminal de paiement comprend à la fois un module de messages textuels et un agencement audio pour envoyer des informations au titulaire de carte par l'intermédiaire dudit terminal ou dudit dispositif mobile (3) du titulaire de carte.

Dans certains modes de réalisation, le deuxième dispositif de détection (101) comprend un agencement pour mesurer le déplacement ou le mouvement du doigt sur l'écran à partir d'une position ou d'une orientation initiale donnée, la longueur du déplacement ou du mouvement étant caractérisée par la valeur d ou l'angle d'orientation. La longueur d ou l'angle d'orientation est comparé à une valeur de seuil mémorisée dans ledit deuxième dispositif de détection (101). Si la longueur d ou l'angle d'orientation est supérieur à la valeur de seuil, un signal est transmis à l'agencement d'authentification pour indiquer qu'il y a un déplacement du doigt. Si, au contraire, la longueur d ou l'angle d'orientation est inférieur à la valeur de seuil, le deuxième dispositif de détection (101) considère qu'aucun déplacement du doigt n'a lieu, et un signal est transmis à l'agencement d'authentification indiquant qu'il n'y a pas de déplacement du doigt.

Dans certains modes de réalisation, le terminal portable de paiement ou de point de vente (1) peut comprendre un contrôleur (10) comprenant au moins :
- le deuxième dispositif de détection (101) qui est connecté à l'écran (14) du terminal (1) de manière à capturer et enregistrer, dans une troisième mémoire (104), les données liées aux positions du doigt lorsque ledit écran (14) est touché ;
- un dispositif de génération de positions (102), comprenant un agencement pour générer des données correspondant à diverses positions sur l'écran (14), lesdites diverses positions étant enregistrées dans une quatrième mémoire (105) ;
- un processeur (100) et une cinquième mémoire (103) comprenant un ensemble de programmes exécutés sur ledit processeur (100) de manière à éviter que l'écran tactile (14) affiche une « chaîne de touches » avec les positions de touches (20) déterminées par les données générées par le dispositif de génération de positions (102) ;
l'ensemble de programmes de la cinquième mémoire dudit contrôleur (10) comprenant au moins :
- un algorithme de comparaison pour comparer les données correspondant aux régions touchées, enregistrées dans la troisième mémoire, avec les données représentatives de chaque emplacement de l'écran générées par le dispositif de génération de positions et enregistrées dans la quatrième mémoire ;
- un algorithme audio pour produire, dans un casque (2) connecté à la fiche, un signal audible correspondant à la valeur de la touche (20) ;
- un premier algorithme d'itération pour réitérer l'algorithme de comparaison et l'algorithme audio jusqu'à ce que l'utilisateur écoutant la valeur qu'il attend retire le doigt de l'écran (14), cette action déclenchant dans la mémoire la mémorisation de ladite valeur en tant que premier chiffre ;
- un deuxième algorithme d'itération pour réitérer en outre le premier algorithme d'itération à chaque fois que l'agencement d'authentification reçoit un nouveau signal de détection de contact et tant que la valeur du nombre de chiffres mémorisée est inférieure à la valeur maximum des nombres de chiffres contenus par le code PIN ou le code d'identification.

Dans certains modes de réalisation, le premier dispositif de détection (11) est connecté au contrôleur (10) de manière à transmettre le signal électrique pour déclencher le mode d'accessibilité.

Dans certains modes de réalisation, le processeur du contrôleur est connecté à la première mémoire pour télécharger et exécuter une séquence d'instructions représentant le mode d'accessibilité lors de la réception dudit signal électrique.

Dans certains modes de réalisation, le contrôleur (10) est connecté à l'agencement d'authentification (12) de manière à lui transmettre un signal d'activation lorsque le mode d'accessibilité est actif, l'agencement d'authentification (12) générant les « chaînes de touches » pour l'identification du titulaire de carte après la réception dudit signal d'activation.

Dans certains modes de réalisation, le contrôleur (10) transmet un ensemble de données, comprenant au moins les valeurs de position générées par le dispositif de génération de positions (102), à l'agencement d'authentification (12), ledit agencement d'authentification (12) générant la « chaîne de touches » à un emplacement de l'écran (14) sur la base dudit ensemble de données.

Dans certains modes de réalisation, l'agencement d'authentification est connecté au deuxième dispositif de détection de manière à récupérer une « chaîne de touches » dans le « fichier de chaînes » lorsque ledit deuxième dispositif de détection (101) détecte le doigt sur l'écran. Lorsque le deuxième dispositif de détection détecte un déplacement ou un mouvement du doigt sur l'écran, ledit agencement d'authentification attribue à la position du doigt une valeur d'une touche (20) de la « chaîne de touches ». Par exemple et sans limitation, lorsque le premier déplacement ou mouvement du doigt est détecté sur l'écran, l'agencement d'authentification attribue la valeur de la première touche (20) de la « chaîne de touches », par exemple « 2 », à la position du doigt et un son ou un signal audio préenregistré correspondant à la touche « 2 » est récupéré dans l'agencement audio et émis par l'intermédiaire du casque de l'utilisateur indiquant la valeur de la touche (20). Lorsque le deuxième dispositif de détection détecte un deuxième déplacement ou mouvement du doigt, à partir de la dernière position, l'agencement d'authentification attribue la valeur de la deuxième touche (20) de la « chaîne de touches », par exemple « 7 », à la position du doigt et un son ou un signal audio préenregistré correspondant à la touche « 7 » est récupéré dans l'agencement audio et est émis par l'intermédiaire du casque (2) de l'utilisateur indiquant la valeur de la touche (20), et ainsi de suite jusqu'à ce que l'utilisateur choisisse et valide une valeur donnée.

Dans certains modes de réalisation, l'agencement d'authentification comprend un module de désignation de touches (106) qui génère une liste de touches comprenant des informations concernant chaque touche (20) de la « chaîne de touches » et la position associée, ladite liste de touches étant réutilisée par ledit agencement d'authentification si l'utilisateur déplaçant son doigt dans une direction ou une orientation donnée retourne à une position précédente ou dans une autre direction de manière à corriger ou changer un choix de touche (20).

Dans certains modes de réalisation, l'agencement d'authentification comprend un programme qui détermine, en temps réel, à partir des informations contenues dans la liste de touches, la direction du doigt se déplaçant sur l'écran de manière à contrôler si l'utilisateur déplace ledit doigt en avant ou en arrière ou dans n'importe quelle orientation.

Dans certains modes de réalisation, le terminal portable de paiement ou de point de vente (1) comprend un dispositif de comptage (16) connecté à l'agencement d'authentification (12) et à la deuxième mémoire (15) du terminal (1), ledit dispositif de comptage (16) comptant le nombre de chiffres mémorisés dans la deuxième mémoire (15) et, lorsque ledit nombre de comptage correspond à une valeur prédéterminée enregistrée et représentant le nombre de chiffres du PIN/de la SNL, émettant un signal vers ledit agencement d'authentification (12) de manière à exécuter le processus d'authentification.

Dans certains modes de réalisation, le premier dispositif de détection est un commutateur électromécanique.

Dans certains modes de réalisation, le premier dispositif de détection est un capteur.

Dans certains modes de réalisation, le terminal (1) peut comprendre un ensemble de clés mémorisé dans une sixième mémoire, incluse dans le terminal, ledit ensemble de clés ne pouvant pas être lu à partir de l'extérieur du terminal et correspondant à l'ensemble de clés mémorisé dans la première mémoire, ledit ensemble de clés mémorisé dans la sixième mémoire étant poussé avec l'application instantanée sur la machine virtuelle s'exécutant sur le dispositif mobile (3) de titulaire de carte, ledit ensemble de clés de la sixième mémoire étant utilisé pour l'échange sécurisé de données et/ou d'informations entre le terminal et le dispositif mobile (3) de titulaire de carte et enregistré dans une mémoire du dispositif mobile (3) de titulaire de carte où il ne peut pas être lu à partir de l'extérieur.

Dans certains modes de réalisation, le terminal (1) comprend au moins un ensemble de programmes envoyé au dispositif mobile (3) du titulaire de carte pour supprimer la machine virtuelle et/ou l'application instantanée s'exécutant sur ladite machine virtuelle, dudit dispositif mobile (3) après la validation de la transaction.

Dans certains modes de réalisation, la machine virtuelle comprend au moins un ensemble de programmes pour simuler chaque composant du terminal de paiement et leur connexion de manière à mettre en œuvre, lors de l'exécution de l'application instantanée, un mode d'accessibilité comprenant au moins le mode d'accessibilité tel qu'exécuté par ledit terminal.

Dans certains modes de réalisation, l'application de mode d'accessibilité installée ou l'application instantanée peut comprendre un ensemble de programmes pour simuler les fonctionnalités de chaque composant du terminal de paiement et leur connexion de manière à mettre en œuvre un mode d'accessibilité comprenant au moins le mode d'accessibilité tel qu'exécuté par ledit terminal.

Dans certains modes de réalisation, l'application de mode d'accessibilité installée ou l'application instantanée lancée par le terminal sur le dispositif mobile (3) du titulaire de carte comprend au moins un programme dont l'exécution sur le dispositif mobile (3) du titulaire de carte permet de répondre à la demande d'authentification et/ou de code PIN envoyée par le terminal.

Dans certains modes de réalisation, l'application de mode d'accessibilité installée ou l'application instantanée lancée par le terminal sur le dispositif mobile (3) du titulaire de carte comprend au moins un programme dont l'exécution sur le dispositif mobile (3) du titulaire de carte récupère, dans la mémoire dudit dispositif mobile (3) du titulaire de carte, l'ensemble de clés enregistré, permettant audit dispositif mobile (3) de répondre à la demande d'authentification et/ou de code PIN envoyée par le terminal.

Dans certains modes de réalisation, le terminal comprend une mémoire dans laquelle les informations de transaction relatives au moins au montant de la transaction et/ou au marchand sont enregistrées, lesdites informations étant transmises avec la demande de code PIN au dispositif mobile (3) du titulaire de carte.

Dans certains modes de réalisation, l'application de mode d'accessibilité installée ou l'application instantanée s'exécutant sur le dispositif mobile (3) du titulaire de carte comprend au moins un ensemble de programmes pour configurer le dispositif mobile (3) de titulaire de carte, lorsqu'au moins une demande d'entrée de code PIN a été envoyée par ledit terminal, de manière à :
- vérifier si un casque (2) est enfiché ou non dans le connecteur jack audio dudit dispositif mobile (3) ;
- demander, à l'aide d'un moyen de notification, la connexion d'un casque (2) au dispositif mobile (3), si aucun casque (2) n'est enfiché ;
- lancer l'exécution du mode d'accessibilité pour l'entrée du code PIN une fois qu'un casque (2) est enfiché.

Dans certains modes de réalisation, l'application instantanée ou l'application de mode d'accessibilité installée s'exécutant sur le dispositif mobile (3) du titulaire de carte comprend au moins un programme pour récupérer l'ensemble de clés dans la mémoire dudit dispositif mobile (3) de manière à chiffrer le code PIN entré par le titulaire de carte avant son envoi au terminal pour la validation de la transaction.

Dans certains modes de réalisation, l'application instantanée ou l'application de mode d'accessibilité installée sur le dispositif mobile (3) du titulaire de carte peut comprendre au moins un programme pour brouiller et maintenir en noir l'écran du dispositif mobile (3) du titulaire de carte pendant la séquence entière du mode d'accessibilité.

Dans certains modes de réalisation, l'application instantanée ou l'application de mode d'accessibilité installée peut comprendre au moins un programme configurant l'écran du dispositif mobile (3) du titulaire de carte pour détecter la position du doigt du titulaire de carte lorsque ledit titulaire de carte déplace son doigt sur ledit écran pour sélectionner chaque chiffre de son code PIN en déplaçant son doigt sur ledit écran.

Dans certains modes de réalisation, l'application instantanée ou l'application de mode d'accessibilité installée comprend au moins un programme configurant le dispositif mobile (3) du titulaire de carte pour envoyer, par l'intermédiaire du casque (2), les signaux audio préenregistrés correspondant à chaque position du doigt pour aider le titulaire de carte à choisir les chiffres de son code PIN. Dans certains modes de réalisation, les signaux audio sont transmis au dispositif mobile (3) du titulaire de carte avec les informations de transaction et le code PIN demandés par le terminal.

Dans certains modes de réalisation, l'application instantanée ou l'application de mode d'accessibilité installée comprend au moins un programme pour configurer le dispositif mobile (3) du titulaire de carte de manière à permettre au titulaire de carte d'entrer son code PIN au moyen d'une application tiers autorisée. Par exemple, le titulaire de carte peut utiliser une application telle que « itsme ».

« Itsme » est une application qui permet à un utilisateur de confirmer son identité en utilisant son dispositif mobile (3) tel qu'un téléphone intelligent. « Itsme » utilise les données de la carte d'identité électronique (eID), de la carte SIM de son téléphone intelligent et de son téléphone intelligent pour créer une ID (identité) unique associée à un code PIN.

Dans certains modes de réalisation, l'application instantanée ou l'application de mode d'accessibilité installée comprend au moins un programme pour configurer le dispositif mobile (3) du titulaire de carte de manière à permettre au titulaire de carte de valider la transaction en utilisant des moyens de reconnaissance d'empreinte digitale ou faciale inclus dans ledit dispositif mobile (3) du titulaire de carte.

La présente invention concerne également un procédé pour l'identification sécurisée d'un titulaire de carte (personne normale ou mal voyante) avec un terminal portable de paiement ou de point de vente (1) tel que décrit ci-dessus (dans la présente demande) et/ou ledit dispositif mobile (3) de titulaire de carte.

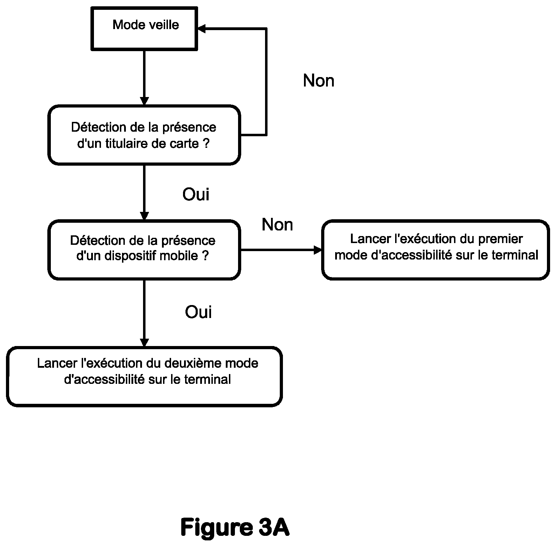

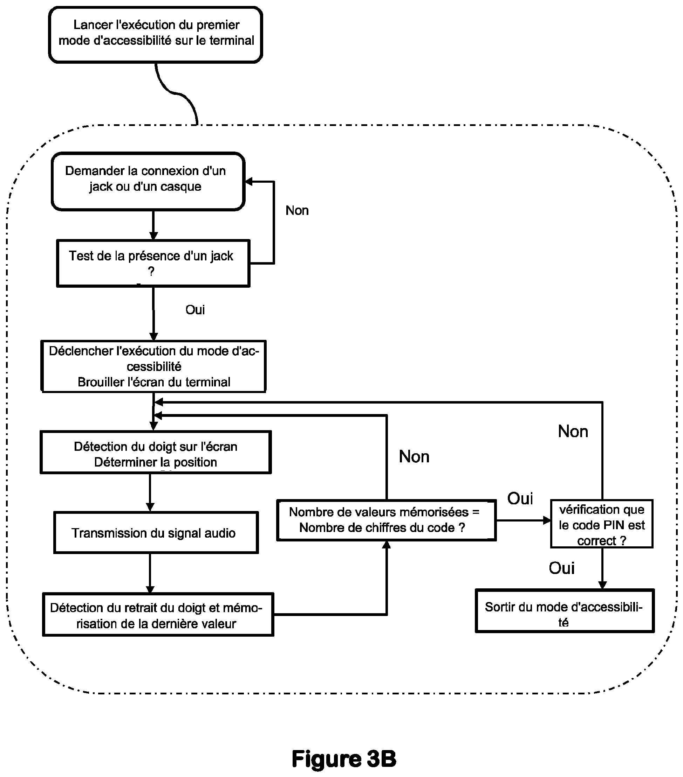

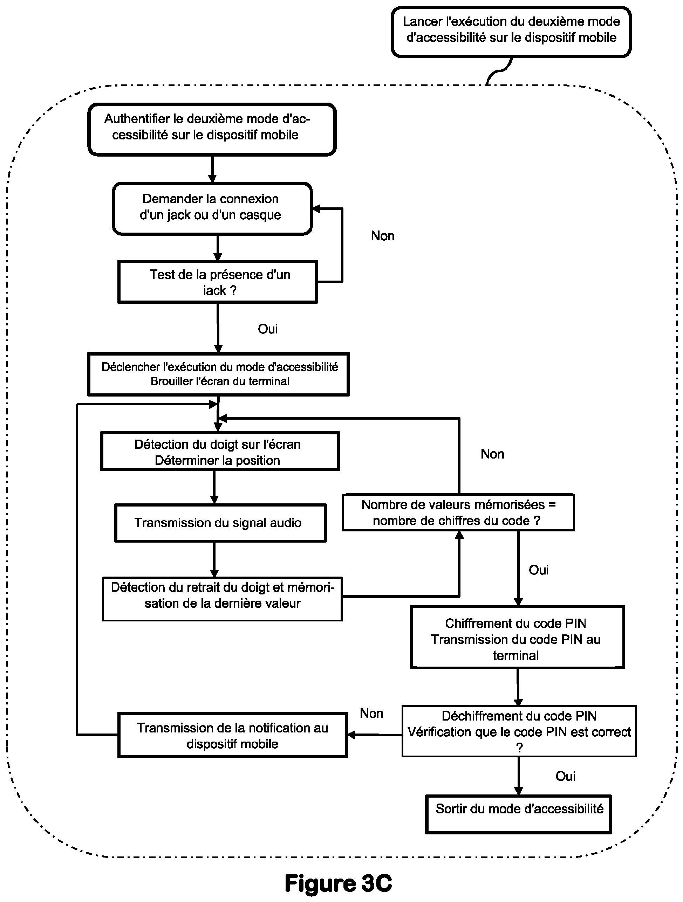

Dans certains modes de réalisation, le procédé pour l'identification sécurisée (voir les figures 3A, 3B et 3C) d'un titulaire de carte comprend au moins l'étape :
- de détection de moyens de communication filaire/sans fil d'un dispositif mobile (3) ;
le procédé étant caractérisé en ce que, si le dispositif mobile (3) du titulaire de carte est détecté, il comprend au moins l'étape de configuration du terminal (1) pour :
- lancer l'exécution un mode d'accessibilité sur le dispositif mobile (3) du titulaire de carte ;
- transmettre une demande au dispositif mobile pour envoyer un code PIN au terminal (1) ; et
- lors de la réception d'une communication du dispositif mobile comprenant des informations, déchiffrer lesdites informations pour obtenir le code PIN et valider la transaction.

Dans certains modes de réalisation, le procédé pour l'identification sécurisée comprend au moins, lors du lancement du mode d'accessibilité, les étapes :
- de vérification si une application propriétaire de mode d'accessibilité est installée sur le dispositif mobile ;
- d'exécution d'une authentification de ladite application de mode d'accessibilité installée.

Dans certains modes de réalisation, le procédé pour l'identification sécurisée comprend au moins les étapes :
- de création d'une machine virtuelle si, lors du lancement du mode d'accessibilité sur le dispositif mobile (3), le terminal détermine qu'aucune application de mode d'accessibilité n'est installée sur ledit dispositif mobile ;
- de transmission de ladite machine virtuelle au dispositif mobile (3) du titulaire de carte;
- de poussée d'une application instantanée sur ladite machine virtuelle pour exécuter le mode d'accessibilité sur le dispositif mobile (3).

Dans certains modes de réalisation, le procédé pour l'identification sécurisée d'un titulaire de carte peut comprendre l'étape de chiffrement au moins du code PIN ou d'une partie du code PIN sur le dispositif mobile (3) de titulaire de carte avant sa transmission au terminal pour la validation.

Dans certains modes de réalisation, si le dispositif mobile (3) n'est pas détecté, le procédé pour l'identification sécurisée comprend au moins les étapes :
- de demande, au moyen d'une notification, sur l'écran du terminal, de la connexion d'un casque (2) dans le connecteur de fiche dudit terminal ;
- de détection de la présence d'une fiche enfichée dans le connecteur du terminal (1) pour la connexion d'un casque (2) de titulaire de carte;
- de déclenchement de l'exécution d'un premier mode d'accessibilité permettant au titulaire de carte de s'identifier ;
- de brouillage et de maintien de l'écran en noir pendant la séquence du mode d'accessibilité ;
- de configuration de l'écran pour détecter la position du doigt du titulaire de carte lorsque ledit titulaire de carte déplace son doigt sur ledit écran pour sélectionner chaque chiffre de son code PIN en déplaçant son doigt sur ledit écran ;
- d'envoi, par l'intermédiaire du casque (2), de signaux audio préenregistrés correspondant à chaque position du doigt pour aider le titulaire de carte à choisir les chiffres de son code PIN.

Dans certains modes de réalisation, l'étape d'exécution du mode d'accessibilité sur le dispositif mobile (3) du titulaire de carte peut comprendre les étapes :
- de contrôle si un casque (2) est enfiché ou non dans le connecteur jack audio dudit dispositif mobile (3) ;
- de demande de la connexion d'un casque (2) au dispositif mobile (3), si aucun casque (2) n'est enfiché ;
- de lancement de l'exécution du mode d'accessibilité pour l'entrée du code PIN une fois qu'un casque (2) est enfiché.

Dans certains modes de réalisation, le procédé pour l'identification sécurisée d'un titulaire de carte comprend au moins les étapes :
- de génération d'une « chaîne de touches » comprenant un ensemble de touches (20) ne devant pas être affichées à des positions sur l'écran (14) du terminal (1) pour l'entrée du PIN/de la SNL ;
- de détection de la longueur ou de l'orientation du déplacement du doigt sur l'écran et de transmission d'un signal correspondant à la longueur d ou à l'angle d'orientation pour indiquer qu'un déplacement a lieu ou non en fonction de la valeur de ladite longueur d ou dudit angle d'orientation comparée à une valeur de seuil mémorisée ;
- de récupération, lors de la réception d'un signal indiquant un déplacement, dans le « fichier de chaînes » mémorisé, d'une « chaîne de touches » de manière à attribuer une valeur de touche correspondant à la longueur d ou à l'angle d'orientation du déplacement du doigt, et de sélection, parmi les signaux audio préenregistrés correspondant à chaque touche de la « chaîne de touches », du son correspondant à la touche attribuée au déplacement et d'émission de celui-ci par l'intermédiaire du connecteur de fiche vers le casque de titulaire de carte (2) ;
   - de réitération des étapes de détection et de récupération jusqu'à ce que le doigt soit retiré de l'écran (14) ;
   - de mémorisation de la dernière valeur lors du retrait du doigt en tant que chiffre du PIN/de la SNL.

Dans certains modes de réalisation, le procédé pour l'identification sécurisée comprend également au moins les étapes :
- de génération d'un ensemble de données correspondant à diverses positions sur l'écran (14) ;
- de génération de la « chaîne de touches » à un emplacement de l'écran sur la base d'un sous-ensemble de l'ensemble de données de diverses positions généré.

La présente demande décrit diverses caractéristiques techniques et divers avantages avec référence aux figures et/ou aux divers modes de réalisation. Les hommes du métier comprendront que les caractéristiques techniques d'un mode de réalisation donné peuvent en fait être combinées avec des caractéristiques d'un autre mode de réalisation, sauf spécification contraire, ou sauf si la combinaison ne fournit pas une solution à au moins l'un des problèmes techniques mentionnés dans la présente demande. De plus, les caractéristiques techniques décrites dans un mode de réalisation donné peuvent être isolées des autres caractéristiques techniques de ce mode de réalisation, sauf spécification contraire.

Il doit être évident aux hommes du métier que la présente invention permet la réalisation de modes de réalisation en de nombreuses formes spécifiques sans s'écarter du domaine d'application de l'invention telle que revendiquée. Par conséquent, les présents modes de réalisation doivent être considérés à titre d'illustration, mais peuvent être modifiés dans le domaine défini par la protection demandée, et l'invention ne doit pas être limitée aux détails donnés ci-dessus.

## Revendications

1. Terminal portable de paiement ou de point de vente pour une transaction sécurisée comprenant au moins :
• une première mémoire pour mémoriser un ensemble de programmes ou une séquence d'instructions à exécuter sur un processeur dudit terminal et au moins un ensemble de clés de chiffrement ;
• un dispositif de détection de moyens de communication filaire ou sans fil d'un dispositif mobile (3) d'un titulaire de carte;
• des moyens de communication pour se connecter au dispositif mobile du titulaire de carte ;
• un module de gestion de transaction comprenant un agencement pour configurer le terminal (1) de manière à au moins :
∘ transmettre une demande au dispositif mobile pour envoyer un code PIN au terminal (1) ;
∘ lors de la réception d'une communication du dispositif mobile (3) comprenant des informations, déchiffrer lesdites informations pour obtenir le code PIN, au moyen de l'ensemble de clés pour le chiffrement et valider la transaction ;
∘ réaliser une vérification de l'installation d'une application propriétaire d'un mode d'accessibilité sur le dispositif mobile ;
∘ lancer l'exécution dudit mode d'accessibilité sur ledit dispositif mobile (3) ; et
∘ valider la transaction par envoi d'un signal d'activation ou des instructions au dispositif mobile (3) du titulaire de carte via un agencement matériel et logiciel,
le terminal étant **caractérisé en ce qu'**il comprend au moins un système d'exploitation (OS) pour la création d'une machine virtuelle, si, lors du lancement du mode d'accessibilité sur le dispositif mobile (3), le terminal détermine qu'aucune application de mode d'accessibilité n'est installée sur ledit dispositif mobile, ladite machine virtuelle étant transmise au dispositif mobile (3) du titulaire de carte, lorsque ledit dispositif mobile (3) est détecté au moyen du dispositif de détection de moyens de communication filaire ou sans fil du terminal, de manière à être installée sur ledit dispositif mobile (3), et
**en ce qu'**il comprend au moins une application instantanée qui est poussée à partir du terminal dans la machine virtuelle s'exécutant sur le dispositif mobile (3), pour exécuter le mode d'accessibilité sur le dispositif mobile (3) du titulaire de carte.

2. Terminal portable de paiement ou de point de vente pour une transaction sécurisée selon la revendication 1, **caractérisé en ce que**, lors du lancement du mode d'accessibilité sur le dispositif mobile (3), le terminal comprend au moins un programme pour, suite à la vérification de l'installation d'une application propriétaire de mode d'accessibilité sur le dispositif mobile, téléchargée à partir d'un portail de téléchargement d'applications, exécuter une authentification de ladite application de mode d'accessibilité installée au moyen d'un ensemble de clés pour l'authentification mémorisé dans la première mémoire.

3. Terminal portable de paiement pour une transaction sécurisée selon la revendication 1, **caractérisé en ce qu'**il comprend en outre :
• l' application de mode d'accessibilité mémorisée dans la première mémoire et mettant en œuvre la séquence entière du mode d'accessibilité du terminal pour permettre au titulaire de carte de valider une transaction sur l'écran (14) du terminal ;
• un agencement d'authentification pour mettre en œuvre un processus d'authentification pour les titulaires de carte en entrant sur le terminal un code PIN ou une séquence de nombres et de lettres (SNL) ;
• un capteur de proximité pour détecter la présence d'un titulaire de carte ;
• un connecteur jack ;
• un premier dispositif de détection (11) pour détecter la présence, dans le connecteur jack du terminal, d'une fiche enfichée pour connecter un casque de titulaire de carte et comprenant un agencement pour produire un signal électrique pour déclencher l'exécution du mode d'accessibilité ;
• un deuxième dispositif de détection (101) pour détecter la position du doigt sur l'écran (14) du terminal, chaque fois qu'un doigt du propriétaire du casque (2) touche l'écran (14) du terminal.

4. Terminal portable de paiement pour une transaction sécurisée selon la revendication 1, **caractérisé en ce que** le module de gestion de transaction comprend en outre un agencement pour au moins configurer ledit terminal pour exécuter, si le dispositif mobile (3) de titulaire de carte n'est pas détecté par le dispositif de détection de moyens de communication filaire ou sans fil, un mode d'accessibilité, dans lequel, au moins, le terminal :
• comprend un connecteur jack ;
• demande, à l'aide de moyens de notification, la connexion d'un casque (2) dans le connecteur jack dudit terminal ;
• exécute l'application de mode d'accessibilité, après la détection, au moyen du premier dispositif de détection, d'une fiche enfichée pour connecter un casque de titulaire de carte (2), l'écran du terminal étant maintenu en noir pendant la séquence entière du mode d'accessibilité ;
• configure, au moyen d'un ensemble d'agencements, l'écran pour détecter la position du doigt du titulaire de carte lorsque ledit titulaire de carte déplace son doigt sur ledit écran pour sélectionner chaque chiffre de son code PIN en déplaçant son doigt sur ledit écran ;
• envoie, par l'intermédiaire du casque (2), de signaux audio préenregistrés correspondant à chaque position du doigt pour aider le titulaire de carte à choisir les chiffres de son code PIN.

5. Terminal portable de paiement pour une transaction sécurisée selon les revendications 1 à 3, **caractérisé en ce qu'**il comprend au moins un moyen de notification qui est un agencement audio pour émettre un message vocal par l'intermédiaire d'un haut-parleur, inclus dans ledit terminal, et/ou envoyer ledit message vocal au dispositif mobile (3) du titulaire de carte.

6. Terminal portable de paiement pour une transaction sécurisée selon les revendications 1 à 3, **caractérisé en ce qu'**il comprend un moyen de notification qui est un module de messages textuels pour afficher des informations sur l'écran (14) dudit terminal ou envoyer lesdites informations sur l'écran du dispositif mobile (3) du titulaire de carte.

7. Terminal portable de paiement pour une transaction sécurisée selon les revendications 5 et 6, **caractérisé en ce qu'**il comprend à la fois un module de messages textuels et un agencement audio pour envoyer des informations au titulaire de carte par l'intermédiaire dudit terminal ou dudit dispositif mobile (3) du titulaire de carte.

8. Terminal portable de paiement ou de point de vente pour une transaction sécurisée selon la revendication 1, **caractérisé en ce qu'**il comprend un ensemble de clés mémorisé dans une seconde mémoire, incluse dans le terminal (1), ledit ensemble de clés correspondant à l'ensemble de clés mémorisé dans la première mémoire, l'ensemble de clés mémorisé dans la seconde mémoire étant poussé avec l'application instantanée sur la machine virtuelle s'exécutant sur le dispositif mobile (3) du titulaire de carte, ledit ensemble de clés de la seconde mémoire étant utilisé pour l'échange sécurisé de données et/ou d'informations entre le terminal et le dispositif mobile (3) du titulaire de carte et enregistré dans une mémoire du dispositif mobile (3) du titulaire de carte.

9. Terminal portable de paiement ou de point de vente pour une transaction sécurisée selon la revendication 8, **caractérisé en ce qu'**il comprend au moins un ensemble de programmes envoyé au dispositif mobile (3) du titulaire de carte pour supprimer la machine virtuelle et/ou l'application instantanée s'exécutant sur ladite machine virtuelle, dudit dispositif mobile (3) après la validation de la transaction.

10. Terminal portable de paiement ou de point de vente pour une transaction sécurisée selon la revendication 1, **caractérisé en ce que** la machine virtuelle comprend au moins un ensemble de programmes pour simuler chaque composant du terminal de paiement (1) et leur connexion de manière à mettre en œuvre, lors de l'exécution de l'application instantanée, un mode d'accessibilité comprenant au moins le mode d'accessibilité tel qu'exécuté par ledit terminal (1).

11. Terminal portable de paiement ou de point de vente pour une transaction sécurisée selon l'une des revendications 1, 8, 9 ou 10, **caractérisé en ce que** l'application instantanée comprend un ensemble de programmes pour simuler les fonctionnalités de chaque composant du terminal de paiement (1) et sa connexion de manière à mettre en œuvre un mode d'accessibilité comprenant au moins le mode d'accessibilité tel qu'exécuté par ledit terminal (1).

12. Terminal portable de paiement ou de point de vente pour une transaction sécurisée selon l'une des revendications 1, 8, 9, 10 ou 11, **caractérisé en ce que** l'application instantanée lancée par le terminal sur le dispositif mobile (3) du titulaire de carte comprend au moins un programme dont l'exécution sur le dispositif mobile (3) du titulaire de carte permet de répondre à la demande d'authentification et/ou de code PIN envoyée par le terminal.

13. Terminal portable de paiement ou de point de vente pour une transaction sécurisée selon l'une des revendications 1, 8, 9, 10, 11 ou 12, **caractérisé en ce que** l'application instantanée lancée par le terminal sur le dispositif mobile (3) du titulaire de carte comprend au moins un programme dont l'exécution sur le dispositif mobile (3) du titulaire de carte récupère, dans la mémoire dudit dispositif mobile (3) du titulaire de carte, l'ensemble de clés enregistré, permettant audit dispositif mobile (3) de répondre à la demande d'authentification et/ou de code PIN envoyée par le terminal.

14. Terminal portable de paiement ou de point de vente pour une transaction sécurisée selon les revendications 1 à 13, **caractérisé en ce qu'**il comprend une mémoire dans laquelle les informations de transaction relatives au moins au montant de la transaction et/ou au marchand sont enregistrées, lesdites informations étant transmises avec la demande de code PIN au dispositif mobile (3) du titulaire de carte.

15. Terminal portable de paiement pour une transaction sécurisée selon l'une des revendications 1, 8 à 13, **caractérisé en ce que** l'application instantanée s'exécutant sur le dispositif mobile (3) du titulaire de carte comprend au moins un ensemble de programmes pour configurer le dispositif mobile (3) du titulaire de carte, lorsque la demande d'envoi de code PIN a été envoyée par ledit terminal, de manière à :
• Vérifier si un casque (2) est enfiché ou non dans le connecteur jack audio dudit dispositif mobile (3) ;
• demander, à l'aide d'un moyen de notification, la connexion d'un casque (2) au dispositif mobile (3), si aucun casque (2) n'est enfiché ;
• lancer l'exécution du mode d'accessibilité pour l'entrée du code PIN une fois qu'un casque (2) est enfiché.

16. Terminal portable de paiement pour une transaction sécurisée selon l'une des revendications 8 à 15, **caractérisé en ce que** l'application instantanée s'exécutant sur le dispositif (3) mobile du titulaire de carte comprend au moins un programme pour récupérer l'ensemble de clés dans la mémoire dudit dispositif mobile (3) de manière à chiffrer le code PIN entré par le titulaire de carte avant son envoi au terminal pour la validation de la transaction.

17. Terminal portable de paiement pour une transaction sécurisée selon l'une des revendications 1, 8 à 16, **caractérisé en ce que** l'application instantanée s'exécutant sur le dispositif (3) mobile du titulaire de carte comprend au moins un programme pour maintenir en noir l'écran du dispositif mobile (3) du titulaire de carte pendant la séquence entière du mode d'accessibilité.

18. Terminal portable de paiement pour une transaction sécurisée selon l'une des revendications 1, 8 à 17, **caractérisé en ce que** l'application instantanée comprend au moins un programme configurant l'écran du dispositif mobile (3) du titulaire de carte pour détecter la position du doigt du titulaire de carte lorsque ledit titulaire de carte déplace son doigt sur ledit écran pour sélectionner chaque chiffre de son code PIN en déplaçant son doigt sur ledit écran.

19. Terminal portable de paiement pour une transaction sécurisée selon l'une des revendications 1, 8 à 18, **caractérisé en ce que** l'application instantanée comprend au moins un programme configurant le dispositif mobile (3) du titulaire de carte pour envoyer, par l'intermédiaire du casque (2), les signaux audio préenregistrés correspondant à chaque position du doigt pour aider le titulaire de carte à choisir les chiffres de son code PIN, lesdits signaux audio étant transmis au dispositif mobile (3) du titulaire de carte avec les informations de transaction et le code PIN demandés par le terminal (1).

20. Terminal portable de paiement pour une transaction sécurisée selon l'une des revendications 1, 8 à 19, **caractérisé en ce que** l'application instantanée comprend au moins un programme pour configurer le dispositif mobile (3) du titulaire de carte de manière à permettre au titulaire de carte d'entrer son code PIN au moyen d'une application tiers autorisée.

21. Procédé pour l'identification sécurisée d'un titulaire de carte avec un terminal portable de paiement ou de point de vente (1) selon la revendication 1, ledit procédé comprenant, lorsque le dispositif mobile du titulaire de carte (3) est détecté, au moins les étapes :
de configuration du terminal (1) pour :
• se connecter au dispositif mobile (3) ;
• transmettre une demande au dispositif mobile pour envoyer un code PIN au terminal (1) ;
• lors de la réception d'une communication du dispositif mobile comprenant des informations, déchiffrer lesdites informations pour obtenir le code PIN et valider la transaction ;
le procédé étant **caractérisé en ce que** le terminal est également configuré pour :
• vérifier l'installation d'une application propriétaire d'un mode d'accessibilité sur le dispositif mobile ;
• lancer l'exécution dudit mode d'accessibilité sur le dispositif mobile (3) du titulaire de carte ; et
• valider la transaction, par envoi d'un signal d'activation ou des instructions au dispositif mobile (3) du titulaire de carte via un agencement matériel et logiciel.

22. Procédé pour l'identification sécurisée d'un titulaire de carte selon la revendication 21, **caractérisé en ce qu'**il comprend au moins, lors du lancement du mode d'accessibilité, une exécution d'une authentification de ladite application de mode d'accessibilité installée.

23. Procédé pour l'identification sécurisée d'un titulaire de carte selon la revendication 21, **caractérisé en ce qu'**il comprend au moins l'étape de chiffrement au moins du code PIN ou d'une partie du code PIN sur le dispositif mobile (3) du titulaire de carte avant sa transmission au terminal pour validation.

24. Procédé pour l'identification sécurisée d'un titulaire de carte selon la revendication 21, **caractérisé en ce que** l'étape d'exécution du mode d'accessibilité sur le dispositif mobile (3) du titulaire de carte comprend les étapes :
• de contrôle si un casque (2) est enfiché ou non dans un connecteur jack audio dudit dispositif mobile (3) ;
• de demande de la connexion d'un casque (2) au dispositif mobile (3), si aucun casque (2) n'est enfiché ;
• de lancement de l'exécution du mode d'accessibilité pour l'entrée du code PIN une fois qu'un casque (2) est enfiché.

## Patentansprüche

1. Tragbares Zahlungs- oder Kassenterminal für eine gesicherte Transaktion, umfassend mindestens:
• einen ersten Speicher zum Speichern einer Menge von Programmen oder einer Abfolge von Instruktionen, die auf einem Prozessor des Terminals ausgeführt werden sollen, und mindestens einen Schlüsselsatz zur Verschlüsselung;
• eine Vorrichtung zum Erkennen von drahtgebundenen oder drahtlosen Kommunikationsmitteln eines mobilen Geräts (3) eines Karteninhabers;
• Kommunikationsmittel, um sich mit dem mobilen Gerät des Karteninhabers zu verbinden;
• ein Transaktionsverwaltungsmodul, umfassend eine Einrichtung zum Konfigurieren des Terminals (1), so dass es mindestens:
∘ eine Anforderung an das mobile Gerät zum Senden eines PIN-Code an das Terminal (1) sendet;
∘ bei Empfang einer Mitteilung des mobilen Geräts (3), die Informationen enthält, die Informationen entschlüsselt, um den PIN-Code zu erhalten, mittels des Schlüsselsatzes für die Verschlüsselung, und die Transaktion bestätigt;
∘ eine Überprüfung der Installation einer proprietären Anwendungssoftware für einen Barrierefreiheitsmodus auf dem mobilen Gerät durchführt;
∘ die Ausführung des Barrierefreiheitsmodus auf dem mobilen Gerät (3) startet; und
∘ die Transaktion durch Senden eines Aktivierungssignals oder von Instruktionen an das mobile Gerät (3) des Karteninhabers über eine Hardware- und Software-Einrichtung bestätigt,
wobei das Terminal **dadurch gekennzeichnet ist, dass** es mindestens ein Betriebssystem (OS) umfasst zum Erzeugen einer virtuellen Maschine, wenn das Terminal, beim Starten des Barrierefreiheitsmodus auf dem mobilen Gerät (3), bestimmt, dass keine Barrierefreiheitsmodus-Anwendungssoftware auf dem mobilen Gerät installiert ist, wobei die virtuelle Maschine an das mobile Gerät (3) des Karteninhabers gesendet wird, wenn das mobile Gerät (3) mittels der Vorrichtung zum Erkennen von drahtgebundenen oder drahtlosen Kommunikationsmitteln des Terminals als auf dem mobilen Gerät (3) installiert erkannt wird, und
dadurch, dass es mindestens eine Instant-Anwendungssoftware umfasst, die von dem Terminal aus in der auf dem mobilen Gerät (3) laufenden virtuellen Maschine angestoßen wird, um den Barrierefreiheitsmodus auf dem mobilen Gerät (3) des Karteninhabers auszuführen.

2. Tragbares Zahlungs- oder Kassenterminal für eine gesicherte Transaktion nach Anspruch 1, **dadurch gekennzeichnet, dass** das Terminal, beim Starten des Barrierefreiheitsmodus auf dem mobilen Gerät (3), mindestens ein Programm umfasst, um, nach der Überprüfung der Installation einer proprietären Barrierefreiheitsmodus-Anwendungssoftware auf dem mobilen Gerät, die von einem Portal zum Herunterladen von Anwendungssoftwareprogrammen aus heruntergeladen wurde, eine Authentifizierung der installierten Barrierefreiheitsmodus-Anwendungssoftware mittels eines Schlüsselsatzes für die Authentifizierung, der in dem ersten Speicher gespeichert ist, auszuführen.

3. Tragbares Zahlungsterminal für eine gesicherte Transaktion nach Anspruch 1, **dadurch gekennzeichnet, dass** es ferner umfasst:
• die Barrierefreiheitsmodus-Anwendungssoftware, die in dem ersten Speicher gespeichert ist und die gesamte Sequenz des Barrierefreiheitsmodus des Terminals durchführt, um dem Karteninhaber das Bestätigen einer Transaktion auf dem Bildschirm (14) des Terminals zu gestatten;
• eine Authentifizierungs-Einrichtung, um einen Authentifizierungsprozess für die Karteninhaber durch Eingabe eines PIN-Code oder einer Abfolge von Nummern und Buchstaben (SNL) durchzuführen;
• einen Näherungssensor, um die Anwesenheit eines Karteninhabers zu erkennen;
• einen Klinken-Steckverbinder;
• eine erste Erkennungsvorrichtung (11), um zu erkennen, ob, in dem Klinken-Steckverbinder des Terminals, ein für den Anschluss eines Kopfhörers des Karteninhabers eingesteckter Stecker vorhanden ist, und umfassend eine Einrichtung zum Erzeugen eines elektrischen Signals, um die Ausführung des Barrierefreiheitsmodus auszulösen;
• eine zweite Erkennungsvorrichtung (101), um die Position des Fingers auf dem Bildschirm (14) des Terminals jedes Mal zu erkennen, wenn ein Finger des Besitzers des Kopfhörers (2) den Bildschirm (14) des Terminals berührt.

4. Tragbares Zahlungsterminal für eine gesicherte Transaktion nach Anspruch 1, **dadurch gekennzeichnet, dass** das Transaktionsverwaltungsmodul ferner eine Einrichtung mindestens zum Konfigurieren des Terminals umfasst, um, wenn das mobile Gerät (3) des Karteninhabers von der Vorrichtung zum Erkennen von drahtgebundenen oder drahtlosen Kommunikationsmitteln nicht erkannt wird, einen Barrierefreiheitsmodus auszuführen, wobei, mindestens, das Terminal:
• einen Klinken-Steckverbinder umfasst;
• unter Verwendung von Benachrichtigungsmitteln, den Anschluss eines Kopfhörers (2) in dem Klinken-Steckverbinder des Terminals anfordert;
• die Barrierefreiheitsmodus-Anwendungssoftware, nach dem Erkennen, mittels der ersten Erkennungsvorrichtung, eines für den Anschluss eines Kopfhörers (2) des Karteninhabers eingesteckten Steckers ausführt; wobei der Bildschirm des Terminals während der gesamten Sequenz des Barrierefreiheitsmodus schwarz belassen wird;
• mittels einer Menge von Einrichtungen den Bildschirm so konfiguriert, dass er die Position des Fingers des Karteninhabers erkennt, wenn der Karteninhaber seinen Finger auf dem Bildschirm bewegt, um jede Ziffer seines PIN-Code durch Bewegen seines Fingers auf dem Bildschirm auszuwählen;
• Senden, über den Kopfhörer (2), von vorher aufgezeichneten Audiosignalen, die jeder Position des Fingers entsprechen, um den Karteninhaber bei der Auswahl der Ziffern seines PIN-Code zu unterstützen.

5. Tragbares Zahlungsterminal für eine gesicherte Transaktion nach Anspruch 1 bis 3, **dadurch gekennzeichnet, dass** es ferner mindestens ein Benachrichtigungsmittel umfasst, das eine Audio-Einrichtung ist, um eine Sprachnachricht über einen Lautsprecher, der in dem Terminal enthalten ist, auszugeben und/oder die Sprachnachricht an das mobile Gerät (3) des Karteninhabers zu senden.

6. Tragbares Zahlungsterminal für eine gesicherte Transaktion nach Anspruch 1 bis 3, **dadurch gekennzeichnet, dass** es ferner ein Benachrichtigungsmittel umfasst, das ein Textnachrichtenmodul ist, um Informationen auf dem Bildschirm (14) des Terminals anzuzeigen oder die Informationen auf den Bildschirm des mobilen Geräts (3) des Karteninhabers zu senden.

7. Tragbares Zahlungsterminal für eine gesicherte Transaktion nach Anspruch 5 und 6, **dadurch gekennzeichnet, dass** es gleichzeitig ein Textnachrichtenmodul und eine Audio-Einrichtung ist, um Informationen an den Karteninhaber über das Terminal oder das mobile Gerät (3) des Karteninhabers zu senden.

8. Tragbares Zahlungs- oder Kassenterminal für eine gesicherte Transaktion nach Anspruch 1, **dadurch gekennzeichnet, dass** es einen Schlüsselsatz umfasst, der in einem zweiten Speicher, der in dem Terminal (1) enthalten ist, gespeichert ist, wobei der Schlüsselsatz dem Schlüsselsatz entspricht, der in dem ersten Speicher gespeichert ist, wobei der in dem zweiten Speicher gespeicherte Schlüsselsatz mit der Instant-Anwendungssoftware auf der auf dem mobilen Gerät (3) des Karteninhabers laufenden virtuellen Maschine angestoßen wird, wobei der Schlüsselsatz des zweiten Speichers für den gesicherten Austausch von Daten und/oder von Informationen zwischen dem Terminal und dem mobilen Gerät (3) des Karteninhabers verwendet wird und in einem Speicher des mobilen Geräts (3) des Karteninhabers gespeichert ist.

9. Tragbares Zahlungs- oder Kassenterminal für eine gesicherte Transaktion nach Anspruch 8, **dadurch gekennzeichnet, dass** es mindestens eine Menge von Programmen umfasst, die an das mobile Gerät (3) des Karteninhabers gesendet werden, um die virtuelle Maschine und/oder die auf der virtuellen Maschine laufende Instant-Anwendungssoftware nach dem Bestätigen der Transaktion von dem mobilen Gerät (3) zu löschen.

10. Tragbares Zahlungs- oder Kassenterminal für eine gesicherte Transaktion nach Anspruch 1, **dadurch gekennzeichnet, dass** die virtuelle Maschine mindestens eine Menge von Programmen umfasst, um jedes Bauteil des Zahlungsterminals (1) und deren Verbindung so zu simulieren, dass, bei der Ausführung der Instant-Anwendungssoftware, ein Barrierefreiheitsmodus ausgeführt wird, der mindestens den Barrierefreiheitsmodus umfasst, wie er von dem Terminal (1) ausgeführt wird.

11. Tragbares Zahlungs- oder Kassenterminal für eine gesicherte Transaktion nach einem der Ansprüche 1, 8, 9 oder 10, **dadurch gekennzeichnet, dass** die Instant-Anwendungssoftware eine Menge von Programmen umfasst, um die Funktionalitäten jedes Bauteils des Zahlungsterminals (1) und seiner Verbindung so zu simulieren, dass ein Barrierefreiheitsmodus ausgeführt wird, der mindestens den Barrierefreiheitsmodus umfasst, wie er von dem Terminal (1) ausgeführt wird.

12. Tragbares Zahlungs- oder Kassenterminal für eine gesicherte Transaktion nach einem der Ansprüche 1, 8, 9, 10 oder 11, **dadurch gekennzeichnet, dass** die von dem Terminal auf dem mobilen Gerät (3) des Karteninhabers gestartete Instant-Anwendungssoftware mindestens ein Programm umfasst, dessen Ausführung auf dem mobilen Gerät (3) des Karteninhabers gestattet, auf die von dem Terminal gesendete Authentifizierungs- und/oder PIN-Code Anforderung zu reagieren.

13. Tragbares Zahlungs- oder Kassenterminal für eine gesicherte Transaktion nach einem der Ansprüche 1, 8, 9, 10, 11 oder 12, **dadurch gekennzeichnet, dass** die von dem Terminal auf dem mobilen Gerät (3) des Karteninhabers gestartete Instant-Anwendungssoftware mindestens ein Programm umfasst, dessen Ausführung auf dem mobilen Gerät (3) des Karteninhabers, aus dem Speicher des mobilen Geräts (3) des Karteninhabers, den gespeicherten Schlüsselsatz abruft, der es dem mobilen Gerät (3) gestattet, auf die von dem Terminal gesendete Authentifizierungs- und/oder PIN-Code Anforderung zu reagieren.

14. Tragbares Zahlungs- oder Kassenterminal für eine gesicherte Transaktion nach Anspruch 1 bis 13, **dadurch gekennzeichnet, dass** es einen Speicher umfasst, in dem die Transaktionsinformationen in Bezug mindestens auf den Betrag der Transaktion und/oder den Händler gespeichert sind, wobei die Informationen mit der PIN-Code-Anforderung an das mobile Gerät (3) des Karteninhabers gesendet werden.

15. Tragbares Zahlungsterminal für eine gesicherte Transaktion nach einem der Ansprüche 1, 8 bis 13, **dadurch gekennzeichnet, dass** die auf dem mobilen Gerät (3) des Karteninhabers laufende Instant-Anwendungssoftware mindestens eine Menge von Programmen umfasst, um das mobile Gerät (3) des Karteninhabers zu konfigurieren, so dass es, wenn die Anforderung zum Senden eines PIN-Code von dem Terminal gesendet wurde, mindestens:
• überprüft, ob ein Kopfhörer (2) in den Klinken-Steckverbinder des mobilen Geräts (3) eingesteckt ist oder nicht;
• unter Verwendung eines Benachrichtigungsmittels, den Anschluss eines Kopfhörers (2) an das mobile Gerät (3) anfordert, wenn kein Kopfhörer (2) eingesteckt ist;
• die Ausführung des Barrierefreiheitsmodus für die PIN-Code-Eingabe startet, sobald ein Kopfhörer (2) eingesteckt ist.

16. Tragbares Zahlungsterminal für eine gesicherte Transaktion nach einem der Ansprüche 8 bis 15, **dadurch gekennzeichnet, dass** die auf dem mobilen Gerät (3) des Karteninhabers laufende Instant-Anwendungssoftware mindestens ein Programm umfasst, um den Schlüsselsatz aus dem Speicher des mobilen Geräts (3) abzurufen, so dass der vom Karteninhaber eingegebene PIN-Code vor seiner Sendung an das Terminal zur Bestätigung der Transaktion verschlüsselt wird.

17. Tragbares Zahlungsterminal für eine gesicherte Transaktion nach einem der Ansprüche 1, 8 bis 16, **dadurch gekennzeichnet, dass** die auf dem mobilen Gerät (3) des Karteninhabers laufende Instant-Anwendungssoftware mindestens ein Programm umfasst, um den Bildschirm des mobilen Geräts (3) des Karteninhabers während der vollständigen Sequenz des Barrierefreiheitsmodus schwarz zu belassen.

18. Tragbares Zahlungsterminal für eine gesicherte Transaktion nach einem der Ansprüche 1, 8 bis 17, **dadurch gekennzeichnet, dass** die Instant-Anwendungssoftware mindestens ein Programm umfasst, das den Bildschirm des mobilen Geräts (3) des Karteninhabers so konfiguriert, dass er die Position des Fingers des Karteninhabers erkennt, wenn der Karteninhaber seinen Finger auf dem Bildschirm bewegt, um jede Ziffer seines PIN-Code durch Bewegen seines Fingers auf dem Bildschirm auszuwählen.

19. Tragbares Zahlungsterminal für eine gesicherte Transaktion nach einem der Ansprüche 1, 8 bis 18, **dadurch gekennzeichnet, dass** die Instant-Anwendungssoftware mindestens ein Programm umfasst, das das mobile Gerät (3) des Karteninhabers so konfiguriert, dass es, über den Kopfhörer (2), die vorher gespeicherten Audiosignale, die jeder Position des Fingers entsprechen, um den Karteninhaber bei der Auswahl der Ziffern seines PIN-Code zu unterstützen, sendet, wobei die Audiosignale mit den Transaktionsinformationen und dem PIN-Code, die von dem Terminal (1) angefordert werden, an das mobile Gerät (3) des Karteninhabers gesendet werden.

20. Tragbares Zahlungsterminal für eine gesicherte Transaktion nach einem der Ansprüche 1, 8 bis 19, **dadurch gekennzeichnet, dass** die Instant-Anwendungssoftware mindestens ein Programm umfasst, um das mobile Gerät (3) des Karteninhabers so zu konfigurieren, dass es an dem Karteninhaber gestattet, seinen PIN-Code mittels einer autorisierten Drittanbieter-Anwendungssoftware einzugeben.

21. Verfahren zur gesicherten Identifizierung eines Karteninhabers mit einem tragbaren Zahlungs- oder Kassenterminal (1) nach Anspruch 1, wobei das Verfahren, wenn das mobile Gerät (3) des Karteninhabers erkannt wird, mindestens die Schritte umfasst:
Konfigurieren des Terminals (1), um:
• sich mit dem mobilen Gerät (3) zu verbinden;
• eine Anforderung an das mobile Gerät zum Senden eines PIN-Code an das Terminal (1) zu senden;
• bei Empfang einer Mitteilung des mobilen Geräts, die Informationen enthält, die Informationen zu entschlüsseln, um den PIN-Code zu erhalten und die Transaktion zu bestätigen;
wobei das Verfahren **dadurch gekennzeichnet ist, dass** das Terminal auch dazu konfiguriert wird, um:
• die Installation einer proprietären Anwendungssoftware für einen Barrierefreiheitsmodus auf dem mobilen Gerät zu überprüfen;
• die Ausführung des Barrierefreiheitsmodus auf dem mobilen Gerät (3) des Karteninhabers zu starten; und
• die Transaktion durch Senden von einem Aktivierungssignal oder von Instruktionen an das mobile Gerät (3) des Karteninhabers über eine Hardware- und Software-Einrichtung zu bestätigen.

22. Verfahren zur gesicherten Identifizierung eines Karteninhabers nach Anspruch 21, **dadurch gekennzeichnet, dass** es, beim Starten des Barrierefreiheitsmodus, mindestens eine Ausführung einer Authentifizierung der installierten Barrierefreiheitsmodus-Anwendungssoftware umfasst.

23. Verfahren zur gesicherten Identifizierung eines Karteninhabers nach Anspruch 21, **dadurch gekennzeichnet, dass** es mindestens den Schritt der Verschlüsselung mindestens des PIN-Code oder eines Teils des PIN-Code auf dem mobilen Gerät (3) des Karteninhabers vor seiner Sendung an das Terminal zur Bestätigung umfasst.

24. Verfahren zur gesicherten Identifizierung eines Karteninhabers nach Anspruch 21, **dadurch gekennzeichnet, dass** der Schritt der Ausführung des Barrierefreiheitsmodus auf dem mobilen Gerät (3) des Karteninhabers die Schritte umfasst:
• Prüfen, ob ein Kopfhörer (2) in den Klinken-Steckverbinder des mobilen Geräts (3) eingesteckt ist oder nicht;
• Anfordern des Anschlusses eines Kopfhörers (2) an das mobile Gerät (3), wenn kein Kopfhörer (2) eingesteckt ist;
• Starten der Ausführung des Barrierefreiheitsmodus für die PIN-Code-Eingabe, sobald ein Kopfhörer (2) eingesteckt ist.

## Claims

1. Portable payment or point of sale terminal for a secure transaction comprising at least:
• a first memory to store a set of programs or a sequence of instructions to be executed on a processor of said terminal and at least one set of encryption keys;
• a device for detecting wired or wireless communication means of a mobile device (3) of a cardholder;
• communication means to log on to the mobile device of the cardholder;
• a transaction management module comprising an arrangement to configure the terminal (1) so as to at least:
∘ transmit a request to the mobile device to send a PIN code to the terminal (1);
∘ when receiving a communication from the mobile device (3) comprising information, decrypt said information to obtain the PIN code, using the set of keys for the encryption and validate the transaction;
∘ perform a check of the installation of a proprietary application of an accessibility mode on the mobile device;
∘ launch the execution of said accessibility mode on said mobile device (3); and
∘ validate the transaction by sending an activation signal or instructions to the mobile device (3) of the cardholder via a hardware and software arrangement,
the terminal being **characterised in that** it comprises at least one operating system (OS) to create a virtual machine, if, when launching the accessibility mode on the mobile device (3), the terminal determines that no accessibility mode application is installed on said mobile device, said virtual machine being transmitted to the mobile device (3) of the cardholder, when said mobile device (3) is detected using the device for detecting wired or wireless communication means of the terminal, so as to be installed on said mobile device (3), and
**in that** it comprises at least one instantaneous application which is pushed from the terminal in the virtual machine executing on the mobile device (3), to execute the accessibility mode on the mobile device (3) of the cardholder.

2. Portable payment or point of sale terminal for a secure transaction according to claim 1, **characterised in that**, when launching the accessibility mode on the mobile device (3), the terminal comprises at least one program to, after the check of the installation of a proprietary application of an accessibility mode on the mobile device, downloaded from an application downloading portal, execute an authentication of said accessibility mode application installed using a set of keys for the authentication stored in the first memory.

3. Portable payment terminal for a secure transaction according to claim 1, **characterised in that** it further comprises:
• the accessibility mode application stored in the first memory and implementing the entire sequence of the accessibility mode of the terminal to allow the cardholder to validate a transaction on the screen (14) of the terminal;
• an authentication arrangement to implement an authentication process for the cardholders by entering on the terminal a PIN code or a sequence of numbers and letters (SNL);
• a proximity sensor to detect the presence of a cardholder;
• a jack connector;
• a first detection device (11) to detect the presence, in the jack connector of the terminal, of a plug plugged in to connect a headset of the cardholder and comprising an arrangement to produce an electrical signal to trigger the execution of the accessibility mode;
• a second detection device (101) to detect the position of the finger on the screen (14) of the terminal, each time that a finger of the owner of the headset (2) touches the screen (14) of the terminal.

4. Portable payment terminal for a secure transaction according to claim 1, **characterised in that** the transaction management module further comprises an arrangement to at least configure said terminal to execute, if the mobile device (3) of the cardholder is not detected by the device for detecting wired or wireless communication means, an accessibility mode, in which, at least, the terminal:
• comprises a jack connector;
• requests, using notification means, the connection of a headset (2) in the jack connector of said terminal;
• executes the accessibility mode application, after detection, using the first detection device, of a plug plugged in to connect a headset of the cardholder (2), the screen of the terminal being kept black during the entire sequence of the accessibility mode;
• configures, using a set of arrangements, the screen to detect the position of the finger of the cardholder when said cardholder moves their finger on said screen to select each digit of their PIN code by moving their finger on said screen;
• sends, via the headset (2), pre-recorded audio signals corresponding to each position of the finger to help the cardholder to choose the digits of their PIN code.

5. Portable payment terminal for a secure transaction according to claims 1 to 3, **characterised in that** it comprises at least one notification means which is an audio arrangement to transmit a voice message via a loudspeaker, included in said terminal, and/or send said voice message to the mobile device (3) of the cardholder.

6. Portable payment terminal for a secure transaction according to claims 1 to 3, **characterised in that** it comprises a notification means which is a text message module to display information on the screen (14) of said terminal or send said information to the screen of the mobile device (3) of the cardholder.

7. Portable payment terminal for a secure transaction according to claims 5 and 6, **characterised in that** it comprises both a text message module and an audio arrangement to send information to the cardholder via said terminal or said mobile device (3) of the cardholder.

8. Portable payment or point of sale terminal for a secure transaction according to claim 1, **characterised in that** it comprises a set of keys stored in a second memory, included in the terminal (1), said set of keys corresponding to the set of keys stored in the first memory, the set of keys stored in the second memory being pushed with the instantaneous application on the virtual machine executing on the mobile device (3) of the cardholder, said set of keys of the second memory being used for the secure exchange of data and/or information between the terminal and the mobile device (3) of the cardholder and saved in a memory of the mobile device (3) of the cardholder.

9. Portable payment or point of sale terminal for a secure transaction according to claim 8, **characterised in that** it comprises at least one set of programs sent to the mobile device (3) of the cardholder to delete the virtual machine and/or the instantaneous application executing on said virtual machine, of said mobile device (3) after validation of the transaction.

10. Portable payment or point of sale terminal for a secure transaction according to claim 1, **characterised in that** the virtual machine comprises at least one set of programs to simulate each component of the payment terminal (1) and their connections so as to implement, during execution of the instantaneous application, an accessibility mode comprising at least the accessibility mode as executed by said terminal (1).

11. Portable payment or point of sale terminal for a secure transaction according to one of claims 1, 8, 9 or 10, **characterised in that** the instantaneous application comprises a set of programs to simulate the features of each component of the payment terminal (1) and their connections so as to implement an accessibility mode comprising at least the accessibility mode as executed by said terminal (1).

12. Portable payment or point of sale terminal for a secure transaction according to one of claims 1, 8, 9, 10 or 11, **characterised in that** the instantaneous application launched by the terminal on the mobile device (3) of the cardholder comprises at least one program whose execution on the mobile device (3) of the cardholder is used to reply to the authentication and/or PIN code request sent by the terminal.

13. Portable payment or point of sale terminal for a secure transaction according to one of claims 1, 8, 9, 10, 11 or 12, **characterised in that** the instantaneous application launched by the terminal on the mobile device (3) of the cardholder comprises at least one program whose execution on the mobile device (3) of the cardholder retrieves, in the memory of said mobile device (3) of the cardholder, the set of keys saved, enabling said mobile device (3) to reply to the reply to the authentication and/or PIN code request sent by the terminal.

14. Portable payment or point of sale terminal for a secure transaction according to one of claims 1 to 13, **characterised in that** it comprises a memory in which the transaction information relating at least to the amount of the transaction and/or to the merchant is saved, said information being transmitted with the PIN code request to the mobile device (3) of the cardholder.

15. Portable payment terminal for a secure transaction according to one of claims 1, 8 to 13, **characterised in that** the instantaneous application executing on the mobile device (3) of the cardholder comprises at least one set of programs to configure the mobile device (3) of the cardholder, when the request to send the PIN code has been sent by said terminal, so as to:
• Check whether or not a headset (2) is plugged into the audio jack connector of said mobile device (3);
• request, using a notification means, connection of a headset (2) to the mobile device (3), if no headset (2) is plugged in;
• launch execution of the accessibility mode to enter the PIN code once a headset (2) has been plugged in.

16. Portable payment terminal for a secure transaction according to one of claims 8 to 15, **characterised in that** the instantaneous application executing on the mobile device (3) of the cardholder comprises at least one program to retrieve the set of keys in the memory of said mobile device (3) in order to encode the PIN code entered by the cardholder before it is sent to the terminal to validate the transaction.

17. Portable payment terminal for a secure transaction according to one of claims 1, 8 to 16, **characterised in that** the instantaneous application executing on the mobile device (3) of the cardholder comprises at least one program to keep the screen of the mobile device (3) of the cardholder black during the entire sequence of the accessibility mode.

18. Portable payment terminal for a secure transaction according to one of claims 1, 8 to 17, **characterised in that** the instantaneous application comprises at least one program configuring the screen of the mobile device (3) of the cardholder to detect the position of the finger of the cardholder when said cardholder moves their finger on said screen to select each digit of their PIN code by moving their finger on said screen.

19. Portable payment terminal for a secure transaction according to one of claims 1, 8 to 18, **characterised in that** the instantaneous application comprises at least one program configuring the mobile device (3) of the cardholder to send, via the headset (2), the pre-recorded audio signals corresponding to each position of the finger to help the cardholder to choose the digits of their PIN code, said audio signals being transmitted to the mobile device (3) of the cardholder with the transaction information and the PIN code requested by the terminal (1).

20. Portable payment terminal for a secure transaction according to one of claims 1, 8 to 19, **characterised in that** the instantaneous application comprises at least one program to configure the mobile device (3) of the cardholder so as to allow the cardholder to enter their PIN code using an authorised third party application.

21. Method for the secure identification of a cardholder with a portable payment or point of sale terminal (1) according to claim 1, said method comprising, when the mobile device of the cardholder (3) is detected, at least the steps:
configuring the terminal (1) to:
• log on to the mobile device (3);
• transmit a request to the mobile device to send a PIN code to the terminal (1);
• when receiving a communication from the mobile device comprising information, decrypt said information to obtain the PIN code and validate the transaction;
the method being **characterised in that** the terminal is also configured to:
• check of the installation of a proprietary application of an accessibility mode on the mobile device;
• launch the execution of said accessibility mode on the mobile device (3) of the cardholder; and
• validate the transaction by sending an activation signal or instructions to the mobile device (3) of the cardholder via a hardware and software arrangement.

22. Method for the secure identification of a cardholder according to claim 21, **characterised in that** it comprises at least, when launching the accessibility mode, execution of an authentication of said accessibility mode application installed.

23. Method for the secure identification of a cardholder according to claim 21, **characterised in that** it comprises at least the step of encrypting at least the PIN code or a part of the PIN code on the mobile device (3) of the cardholder before it is sent to the terminal for validation.

24. Method for the secure identification of a cardholder according to claim 21, **characterised in that** the step of executing the accessibility mode on the mobile device (3) of the cardholder comprises the steps:
• of checking whether or not a headset (2) is plugged into an audio jack connector of said mobile device (3);
• of requesting connection of a headset (2) to the mobile device (3), if no headset (2) is plugged in;
• of launching execution of the accessibility mode to enter the PIN code once a headset (2) has been plugged in.
